# EUROPÄISCHE PATENTSCHRIFT

(11) **EP 3 040 808 B1**
(45) Veröffentlichungstag und Bekanntmachung des Hinweises auf die Patenterteilung: **20.11.2019**
(21) Anmeldenummer: 15150032.9
(22) Anmeldetag: 02.01.2015
(51) Int. Cl.: G06F 3/01, B60K 37/06, G06F 9/44, G06F 3/0481, G06F 3/0488, G06F 9/451, B60K 35/00

(54) **Fortbewegungsmittel, Anwenderschnittstelle und Verfahren zur Definition einer Kachel auf einer Anzeigeeinrichtung**
Means of locomotion, user interface and method for defining a tile on a display device
Moyen de transport, interface utilisateur et procédé de définition d'un carreau sur un dispositif d'affichage

(43) Veröffentlichungstag der Anmeldung: 06.07.2016
(73) Patentinhaber: Volkswagen AG, 38436 Wolfsburg (DE)
(72) Erfinder: Wild, Holger, 10179 Berlin (DE)
(74) Vertreter: Hoefer & Partner Patentanwälte mbB

(56) Entgegenhaltungen:
- EP-A1- 2 466 456
- WO-A1-2014/000445
- WO-A1-2014/051628
- US-A1- 2009 031 247
- US-A1- 2009 132 942
- US-A1- 2014 282 166
- US-A1- 2015 007 078

## Beschreibung

### Stand der Technik

Die vorliegende Erfindung betrifft ein Fortbewegungsmittel, eine Anwenderschnittstelle sowie ein Verfahren zur Definition einer Kachel auf einer Anzeigeeinrichtung einer Anwenderschnittstelle. Insbesondere betrifft die vorliegende Erfindung intuitive und einfache Anpassungen einer Position und/oder einer Größe und/oder eines Formates einer Kachel.

In modernen Fortbewegungsmitteln (nachfolgend "Fahrzeug bzw. Fahrzeuge") sind in zunehmendem Maße Bildschirme verbaut, auf weichen Informationen und Schaltflächen zur Bedienung des Fahrzeugs angezeigt werden können. Mitunter werden Funktionen bzw. Funktionsumfänge bzw. Informationsumfänge in sogenannten "Kacheln" zusammengefasst, welche der Anwender ggf. hinsichtlich Größe, Position und Format anpassen kann. Im Stand der Technik sind für diesen Verfahrensschritt Konfigurationsmenüs vorgeschlagen worden, welche vom Anwender explizit aufgerufen werden müssen. Im Konfigurationsmenü selbst kann der Anwender die in den Kacheln enthaltenen Schaltflächen nicht zum Aufruf der Funktionsumfang-bezogenen bzw. Informations-bezogenen Funktionen bedienen. Der Konfigurationsmodus unterscheidet sich insofern von einem Anzeigemodus und einem Bedienmodus. Als "Anzeigemodus" wird im Rahmen der vorliegenden Erfindung eine Anzeigemodalität verstanden, in welcher der Bildschirminhalt zur Anzeige der enthaltenen Informationen bzw. hinsichtlich ästhetischer Gesichtspunkte optimiert ist. Im "Bedienmodus" wird hingegen vermehrt Wert darauf gelegt, dass der Anwender Elemente des Bildschirms, welche er bedienen kann, gegenüber nicht-bedienbaren Elementen erkennen kann. Die den Kacheln im Bedienmodus zugewiesenen Funktionen können auch als "Primärfunktionen" bezeichnet werden, welche in Computer-basierten Betriebssystemen häufig über einen Klick mit einer linken Maustaste bzw. einen Doppelklick zugegriffen werden können, während die im Konfigurationsmodus bedienbaren Funktionen bei Computer-basierten Betriebssystemen eher einem Rechtsklick zugeordnete Organisations- bzw. Konfigurationsfunktionen ("Sekundärfunktionen") sind.

WO 2014/000445 A1 offenbart eine kachelrasterartige graphische Anwenderschnittstelle "widget setting interface", bei der eine bereits definierte "widget unit" per Drag/Drop-Geste in das "widget setting interface" abgelegt wird, oder eine zu definierende "widget unit" per Tippgeste in das "widget setting interface" definiert wird. Die Größe dieser "widget unit" kann nach dem Ablegen innerhalb dieses "widget setting interface" verändert, bzw. deren Position verschoben, werden.

DE 10 2008 048 825 A1 offenbart ein Anzeige-/ Bediensystem für ein Kraftfahrzeug, bei welchem Fenster ("Widgets") über einen Anfasser hinsichtlich ihrer Größe und über Drag/Drop-Gesten wahlfrei hinsichtlich ihrer Position verändert werden können.

US 2014/282166 A1 offenbart die Anpassung einer Kachel basierten Anwenderschnittstelle, welche einen Dashboard-Mode nach Art eines Änderungs- oder Konfigurationsmodus nennt. In diesem sind Anordnung und Größe der Kacheln eines Tile-Layouts vom Anwender anpassbar.

US 2015/007078 A1 offenbart ein Anzeigepanel zur graphischen Anzeige unterschiedlicher Datenquellen, wobei die Anzeige nach Kacheln sortiert und vom Anwender anpassbar ausgestaltet ist.

US 2009/031247 A1 beschreibt eine graphische Anwenderschnittstelle, welche von einem Anwender (anstatt durch einen Entwickler oder Administrator) hinsichtlich der Aufteilung und Gestalt von Kacheln zur Anzeige unterschiedlicher Informationen angepasst werden kann.

Frei wählbare Positionen und Größen für Kacheln können das ästhetische Erscheinungsbild sowie die Anwenderorientierung in Bildschirm-basierten Menüs erheblich einschränken. Es ist daher eine Aufgabe der vorliegenden Erfindung, eine einfache Möglichkeit zur Definition von Positionen und Größen für Kacheln auf einer Anwenderschnittstelle bereitzustellen, welche die im Stand der Technik bekannten Nachteile ausräumt.

### Offenbarung der Erfindung

Die vorstehend identifizierte Aufgabe wird erfindungsgemäß durch ein Verfahren zur Definition einer Kachel auf einer Anzeigeeinrichtung einer Anwenderschnittstelle gelöst. Die Anzeigeeinrichtung kann beispielsweise eine Matrixanzeige sein, auf welcher wahlfreie Inhalte angezeigt werden können. Insbesondere kann die Anzeigeeinrichtung zur dauerhaften mechanischen und informationstechnischen Einbindung in das Armaturenbrett eines Fortbewegungsmittels vorgesehen sein. Unter einer "Kachel" wird im Rahmen der vorliegenden Erfindung ein solches Feld bzw. eine solche Sinneinheit einer graphischen Anwenderoberfläche verstanden, auf welcher Funktionen und/oder Funktionsumfänge und/oder Informationsumfänge und/oder Bedienmöglichkeiten zu einer Funktionsfamilie zusammengefasst und optisch sowie logisch von anderen Informationsumfängen auf dem Bildschirm abgegrenzt sind. Insbesondere können Kacheln vom Anwender definierte Funktionsumfänge beinhalten. In einem ersten Schritt wird ein Kachelraster, umfassend mehrere Zellen, auf der Anzeigeeinrichtung angezeigt. Unter einem "Kachelraster" wird im Rahmen der vorliegenden Erfindung eine optische Orientierung für den Anwender dahingehend verstanden, an welchen Positionen Grenzlinien zwischen Kacheln angeordnet sein können. Unterschiedliche Funktionen sind den Zellen nicht zuzuordnen. Sie dienen lediglich der Definition von Kacheln. Das Kachelraster ist zu unterscheiden von einem Pixelraster einer Anzeigeeinrichtung, welches keine ästhetische Rasterung für unterschiedliche Kacheln vorgibt. Insbesondere kann das Kachelraster matrixartige Eckwerte für Kantenlängen der zu definierenden Kacheln vorgeben. Daher sind die kleinsten Elemente eines Kachelrasters größer als die kleinsten Elemente (Kantenlängen) des Pixelrasters der Anzeigeeinrichtung. Als "Zellen" des Kachelrasters werden die kleinstmöglichen Flächenbereiche zur Definition von Kacheln innerhalb des Kachelrasters verstanden. Das Anzeigen des Kachelrasters erfolgt erfindungsgemäß in einem Bedienmodus, in welchem Primärfunktionen der gegebenenfalls bereits dargestellten Kacheln zugegriffen werden können. In einem zweiten Schritt wird eine Anwendergeste unter Kontakt mit einer berührungssensitiven Oberfläche bezüglich mindestens einer Zelle erfasst. Durch die Anwendergeste definiert der Anwender eine oder mehrere Zellen des Kachelrasters, welche er zu einer einzigen Kachel umwandeln möchte. Beispielsweise im Ansprechen auf ein Beenden des Kontaktes mit der berührungssensitiven Oberfläche (beispielsweise der verwendeten Anzeigeeinrichtung) wird eine Kachel auf den Positionen derjenigen Zellen, welche mittels der Anwendergeste ausgewählt worden sind, definiert. Hierbei wird beispielsweise eine Kachel auf einer einzigen Zelle der überstrichenen Zellen erstellt. Bevorzugt kann eine Vielzahl, insbesondere bevorzugt sämtliche Zellen, welche im Rahmen der Anwendergeste ausgewählt worden sind, zu einer Kachel verschmolzen werden. Die erfindungsgemäß vorgeschlagene Anwendergeste kann beispielsweise als Wischgeste ausgeführt sein. Alternativ oder zusätzlich kann eine sogenannte "Multi-Touch-Geste" eine Vielzahl von Zellen definieren, welche anschließend erfindungsgemäß zu einer Kachel verschmolzen werden. Insbesondere wird eine jeweilige Anwendergeste stets nur eine einzige Kachel definieren, welche sich in Abhängigkeit der am Weitesten voneinander angeordneten Zellen auf der Anzeigeeinrichtung erstreckt. Im Gegensatz zum Stand der Technik wird eine besonders einfache und intuitive Möglichkeit zur Definition einer Kachel vorgeschlagen, welche insbesondere während der Führung eines Fortbewegungsmittels eine geringstmögliche Ablenkung des Anwenders vom Verkehrsgeschehen zur Folge hat.

Die Unteransprüche zeigen bevorzugte Weiterbildungen der Erfindung.

Zur Definition eines Inhaltes für die erfindungsgemäß definierte Kachel kann automatisch ein Auswahlmenü zur Definition eines in der Kachel anzuzeigenden Inhaltes im Ansprechen auf das Definieren der Kachel eingeblendet werden. Mit anderen Worten kann im Ansprechen auf das Beenden der erfindungsgemäß vorgesehenen Anwendergeste eine Auswahl verfügbarer Funktionsumfänge angezeigt werden, welche der Anwender der Kachel zuweisen kann.

Alternativ kann im Ansprechen auf ein Erfassen einer Tippgeste bezüglich der definierten Kachel das vorstehend beschriebene Auswahlmenü zur Definition des in der Kachel anzuzeigenden Inhaltes eingeblendet werden.

Zur endgültigen Zuweisung eines Inhaltes zu der Kachel kann der Anwender einen Beitrag des Auswahlmenüs auswählen, im Ansprechen worauf die fertiggestellte Kachel den gewährten Informationsumfang anzeigt und gegebenenfalls enthaltene Schaltflächen zur Entgegennahme von Anwendereingaben bereitstellt.

Die Auswahlgeste zur Anwahl eines Eintrages des Auswahlmenüs kann beispielsweise eine Tipp-Geste auf den Eintrag umfassen. Alternativ oder zusätzlich kann eine Wischgeste bezüglich des Eintrages mit dem Ziel der Fläche der vorab definierten Kachel umfassen. Mit anderen Worten wird eine Drag/Drop-Geste ausgeführt, welche den Eintrag auf der definierten Kachel abwirft.

Je nachdem, wie viele Funktionsumfänge für die definierte Kachel bereitgestellt werden, kann es vorteilhaft sein, bei der Anwahl eines Eintrages des Auswahlmenüs dem Eintrag untergeordnete Funktionsumfänge in Form eines Auswahluntermenüs anzuzeigen. Das Auswahluntermenü kann beispielsweise im Ansprechen auf eine Tippgeste auf einem betreffenden Eintrag "ausgeklappt" werden. Wie vorstehend beschrieben, kann nun eine Auswahlgeste bezüglich eines Eintrages des Auswahluntermenüs einen entsprechenden Inhalt für die Kachel definieren.

Auch für den Fall, dass eine bereits erfolgreich definierte Kachel an eine andere Position verschoben und/oder mit einer anderen Größe und/oder einem anderen Kantenlängenverhältnis dargestellt werden soll, schlägt die vorliegende Erfindung intuitive und einfach durchzuführende Anwenderschritte vor. Beispielsweise kann der Anwender eine Geste mit einer Mindestkontaktdauer (Englisch "Longpress"-Geste) bezüglich der Kachel durchführen, wodurch die Kachel sich aus ihrer bisherigen Position innerhalb des Kachelrasters löst. Dieser Vorgang kann graphisch dadurch verdeutlicht werden, dass die Kachel zunächst unabhängig von den Positionen der Zellen des Kachelrasters sozusagen am Finger des Anwenders "klebt". Anschließend wird eine Wischgeste bzw. eine Drag-Drop-Geste bezüglich der Kachel erfasst und eine neue Kachel in Abhängigkeit derjenigen Position von Zellen definiert, welche in einem vorbestimmten Verhältnis zu einer Zielposition der Wischgeste stehen. Beispielsweise können sämtliche Zellen des Kachelrasters, welche am Ende des Kontaktes des Anwenders mit der Anzeigeeinrichtung von der abgelösten Kachel überlagert werden, als neue Position der Kachel festgelegt werden und ihr Seitenverhältnis bestimmen. Auch kann ein Überlappungsmaß zwischen der abgelösten Kachel und einer Zelle des Kachelrasters festgelegt sein, welches darüber bestimmt, ob die überlappte Zelle Bestandteil der neuen Kachel wird. Das Maß der Überlappung kann beispielsweise als vorbestimmter Prozentsatz oder Bruchteil einer überlappten Kantenlänge oder einer überlappten Fläche der betreffenden Zelle beschrieben werden, welches beispielsweise die Hälfte, insbesondere ein Drittel, bevorzugt ein Viertel einer gesamten Kantenlänge der Zelle zu betragen hat, damit die Zellposition von der Kachel "vereinnahmt" wird. Auf diese Weise kann verhindert werden, dass versehentlich hergestellte kleinere Überlappungsmaße die überlappte Zelle als zukünftige Zielposition der Kachel definieren.

Bevorzugt kann das erfindungsgemäß vorgeschlagene Kachelraster im Ansprechen auf ein Erfassen einer Wischgeste mit Startposition auf einer bereits definierten Kachel angezeigt werden. Insbesondere ist die Wischgeste nicht im Wesentlichen horizontal gerichtet, so dass sie sich von Gesten unterscheidet, welche einen Wechsel zu einer anderen Bildschirmansicht (z.B. eines weiteren Homescreens) aufrufen. Auf diese Weise wird erst im Ansprechen auf den klaren Wunsch des Anwenders, die Position/die Größe der Kachel zu modifizieren, das Kachelraster zur besseren Orientierung des Anwenders angezeigt. Alternativ oder zusätzlich kann bereits im Ansprechen auf eine Annäherung des Anwenders an die Anzeigeeinrichtung das Kachelraster angezeigt werden, um eine frühestmögliche Orientierung des Anwenders bezüglich möglicher Zielpositionen/ Größen zu gewährleisten.

Gemäß einem zweiten Aspekt der vorliegenden Erfindung wird eine Anwenderschnittstelle vorgeschlagen, welche eine Anzeigeeinrichtung (z.B. ein Bildschirm), eine Erfassungseinrichtung (z.B. eine berührungsempfindliche Oberfläche und/oder eine Sensorik zur Erfassung frei im Raum ausgeführter Anwendergesten) sowie eine Auswerteeinheit (z.B. umfassend einen programmierbaren Prozessor, insbesondere in Form eines Mikrokontrollers Nanokontroller) umfasst. Die Auswerteeinheit kann beispielsweise als elektronisches Steuergerät für den automobilen Einsatz ausgestaltet sein. Erfindungsgemäß ist die Anwenderschnittstelle eingerichtet, ein Verfahren gemäß dem erstgenannten Erfindungsaspekt auszuführen. Die Merkmale, Merkmalskombinationen und die sich aus diesen ergebenden Vorteile entsprechen den in Verbindung mit dem vorgenannten Verfahren ausgeführten derart ersichtlich, dass zur Vermeidung von Wiederholungen auf die obigen Ausführungen verwiesen wird.

Gemäß eines dritten Aspekts der vorliegenden Erfindung wird ein Computerprogrammprodukt vorgeschlagen (z.B. ein Datenspeicher), auf welchem Instruktionen gespeichert sind, die einen programmierbaren Prozessor (z.B. eine Auswerteeinheit) in die Lage versetzen, die Schritte eines Verfahrens gemäß dem erstgenannten Erfindungsaspekt durchzuführen. Das Computerprogrammprodukt kann als CD, DVD, Blue-Ray Disk, Flash-Speicher, Festplatte, RAM/ROM, Cache etc. ausgestaltet sein.

Gemäß einem vierten Aspekt der vorliegenden Erfindung wird eine Signalfolge, repräsentierend Instruktionen vorgeschlagen, welche einen programmierbaren Prozessor (z.B. eine Auswerteeinheit) in die Lage versetzen, die Schritte eines Verfahrens gemäß dem erstgenannten Erfindungsaspekt durchzuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

Gemäß einem fünften Aspekt der vorliegenden Erfindung wird ein Fortbewegungsmittel (z.B. ein Pkw, ein Transporter, ein Lkw, ein Motorrad, ein Luft- und/oder Wasserfahrzeug) vorgeschlagen, welches eine Anwenderschnittstelle gemäß dem zweitgenannten Erfindungsaspekt umfasst. Die Anwenderschnittstelle kann insbesondere für den Führer des Fortbewegungsmittels vorgesehen sein, mittels welcher der Führer während der Führung des Fortbewegungsmittels mit dem Fortbewegungsmittel und seinen technischen Einrichtungen kommunizieren kann. Die Merkmale, Merkmalskombinationen und die sich aus diesen ergebenden Vorteile entsprechen den in Verbindung mit dem erstgenannten Erfindungsaspekt ausgeführten derart ersichtlich, dass zur Vermeidung von Wiederholungen auf die obigen Ausführungen verwiesen wird.

### Kurze Beschreibung der Zeichnungen

Nachfolgend werden Ausführungsbeispiele der vorliegenden Erfindung anhand der beigefügten Zeichnungsfiguren beschrieben. In den Zeichnungen ist:
- Figur 1: eine schematische Übersicht über Komponenten eines Ausführungsbeispiels eines erfindungsgemäßen Fortbewegungsmittels mit einem Ausführungsbeispiel einer erfindungsgemäßen Anwenderschnittstelle;
- Figur 2: eine schematische Bildschirmansicht, welche ein erfindungsgemäß vorgeschlagenes Kachelraster zeigt;
- Figuren 3 bis 5: eine Darstellung einer Anwenderinteraktion zur Definition einer ersten Kachel;
- Figuren 5 und 6: eine Darstellung einer zweiten Anwenderinteraktion zur Definition einer zweiten Kachel;
- Figuren 6 und 7: eine Darstellung einer dritten Anwenderinteraktion zur Definition einer dritten Kachel;
- Figuren 7 und 8: eine Darstellung einer vierten Anwenderinteraktion zur Definition einer vierten Kachel;
- Figuren 8 und 9: eine Darstellung einer fünften Anwenderinteraktion zur Definition einer fünften Kachel;
- Figuren 9 und 10: eine Darstellung einer sechsten Anwenderinteraktion zur Definition einer sechsten Kachel;
- Figur 10: eine Darstellung einer Anwenderinteraktion zur Zuweisung eines Inhaltes zur zweiten Kachel;
- Figur 11: eine Darstellung eines Auswahlmenüs zur Definition eines Inhaltes einer Kachel;
- Figur 12: eine Darstellung eines Auswahluntermenüs zur Definition eines Inhaltes für eine Kachel;
- Figur 13: das Ergebnis der in Figur 12 gezeigten Anwenderinteraktion;
- Figur 14: eine perspektivische Ansicht einer Anwenderschnittstelle mit Kacheln in einem Anzeigemodus;
- Figur 15: eine perspektivische Ansicht einer Anwenderschnittstelle mit Kacheln in einem Bedienmodus;
- Figur 16: eine Darstellung einer Anwendereingabe zur neuen Positionierung sowie zur Veränderung einer Größe einer bereits definierten Kachel; und
- Figur 17: ein Flussdiagramm veranschaulichend Schritte eines Ausführungsbeispiels eines erfindungsgemäßen Verfahrens.

### Ausführungsformen der Erfindung

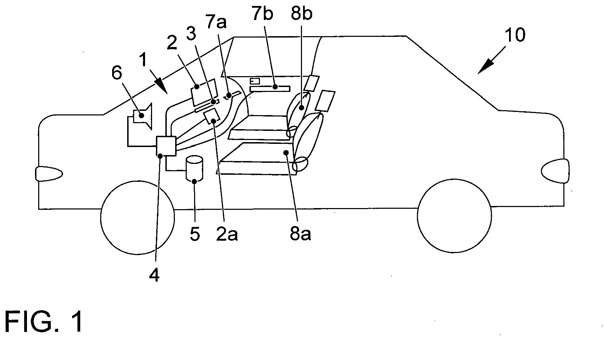

Figur 1 zeigt einen Pkw 10 als Fortbewegungsmittel, in welchem Komponenten eines erfindungsgemäßen Ausführungsbeispiels einer Anwenderschnittstelle enthalten sind. Zwei Bildschirme 2, 2a sind im Armaturenbrett des Pkws 10 als Bestandteil einer Anzeigeeinrichtung und Erfassungseinrichtung übereinander angeordnet. Zwischen den Bildschirmen 2, 2a ist eine Infrarot-LED-Leiste 3 als weiterer Bestandteil der Erfassungseinrichtung angeordnet und zur Erfassung frei im Raum ausgeführter Anwendergesten (3D-Anwendereingaben) eingerichtet. Ein Datenspeicher 5 ist zur Bereithaltung von Instruktionen zur Ausführung eines erfindungsgemäßen Verfahrens sowie zur Definition von Klassen vordefinierter Anwendereingaben vorgesehen und ebenso wie die vorgenannten Komponenten mit einem elektronischen Steuergerät 4 als Auswerteeinheit informationstechnisch verbunden. Das elektronische Steuergerät 4 verfügt zudem über einen Signalausgang zu einem Lautsprecher 6, über welchen Hinweistöne und akustische Untermalungen für Anwendereingaben ausgegeben werden können. Zwei Ambientelichtleisten 7a, 7b sind in das Armaturenbrett bzw. in die Tür des Pkws 10 eingelassen und können über das elektronische Steuergerät 4 zur Ausgabe einer wahlfreien Lichtfarbe mit einer wahlfreien Intensität angesteuert werden. Ein Fahrersitz 8a und ein Beifahrersitz 8b sind zur Aufnahme eines Anwenders der Anwenderschnittstelle 1 vorgesehen.

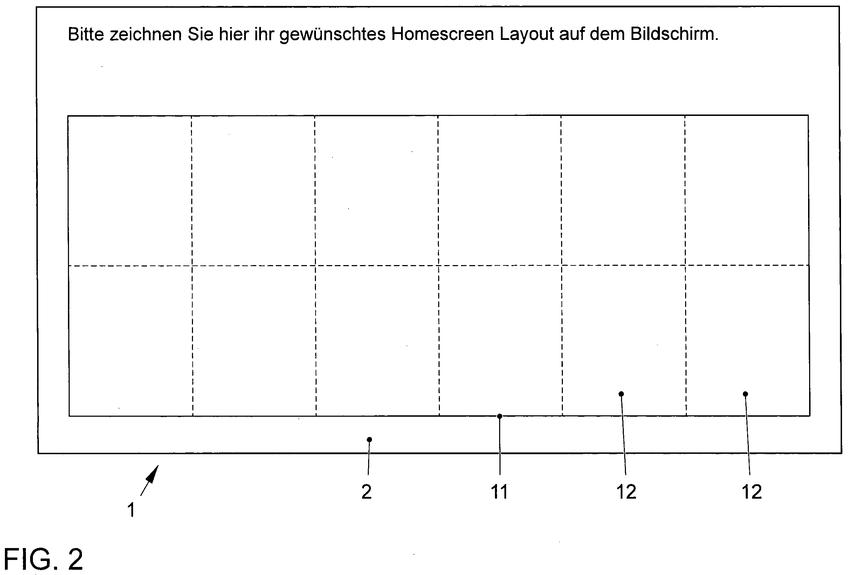

Figur 2 zeigt eine mögliche Bildschirmansicht eines Bildschirms 2 einer erfindungsgemäßen Anwenderschnittstelle 1, in welcher in einem rechteckigen Raster 11 im Wesentlichen quadratische Zellen 12 durch gestrichelte Linien gegeneinander abgegrenzt sind. Die gestrichelten Linien geben dem Anwender eine Orientierung darüber, an welchen Positionen der Bildschirmansicht Randlinien definierbarer Kacheln angeordnet sein können. Ein Hinweistext erläutert die Eingabemöglichkeit zur Definition einer Kachel.

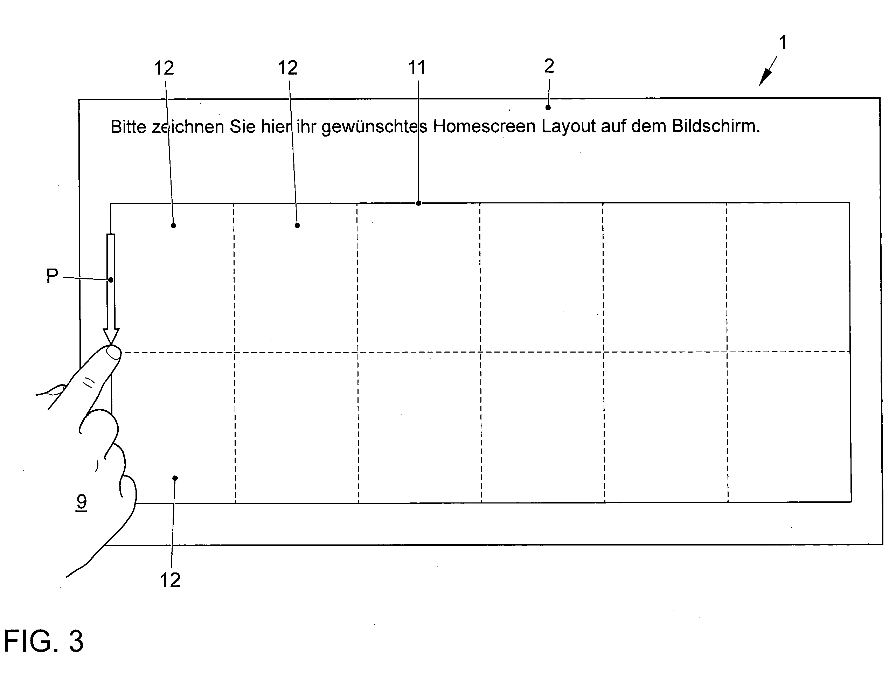

Figur 3 zeigt eine Wischgeste einer Hand 9 eines Anwenders entlang eines Pfeils P auf einer Bildschirmansicht entsprechend Figur 2.

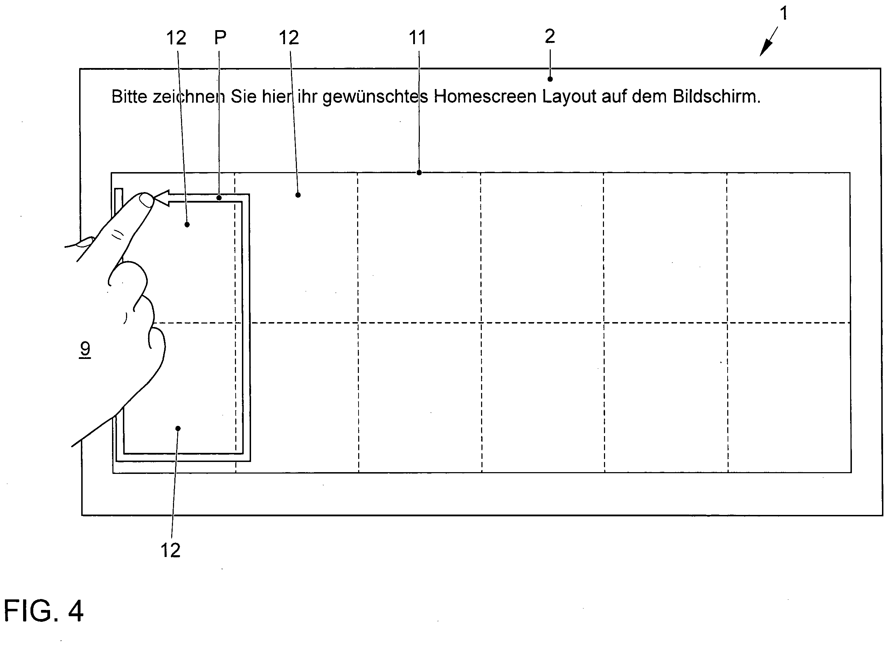

Figur 4 zeigt die in Figur 3 gestartete Wischgeste in einem fortgeschrittenen Stadium. Der Pfad entlang des Pfeils P umrahmt im Wesentlichen die beiden äußerst linken Zellen 12 der Bildschirmansicht.

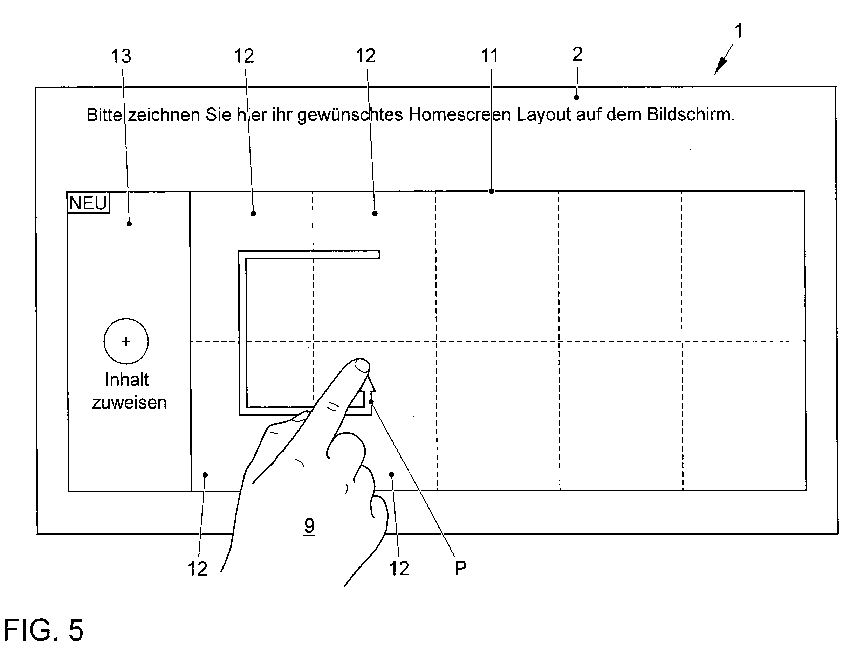

Figur 5 zeigt das Ergebnis der in Verbindung mit den Figuren 3 und 4 veranschaulichten Anwenderinteraktion. Die beiden äußerst linken Zellen sind zu einer neuen Kachel 13 verschmolzen worden, welcher über eine innerhalb der Kachel 13 dargestellte Schaltfläche (ein Kreis mit einem Pluszeichen) ein Informations- und Funktionsumfang als neuer Inhalt zugewiesen werden kann. Eine leichte Überlappung der jeweiligen Nachbarzellen (jeweils zweite Zelle 12 von links, siehe Fig. 4) wurde hierbei ignoriert, um unbeabsichtigte, geringfügige Überlappungen der Anwendereingabe mit vom Anwender nicht adressierten Zellen 12 zu vernachlässigen. Auf diese Weise wird nur eine fokussierte oder schwerpunktmäßige Auswertung der Anwendergeste durchgeführt. Überdies kennzeichnet in der linken oberen Ecke der Schriftzug "NEU" den Status der Kachel 13. Zudem zeigt Figur 5 eine weitere Anwenderinteraktion entlang eines Pfeils P, mit welcher die Hand 9 des Anwenders die vier der Kachel 13 nächstgelegenen Zellen 12 überstreicht.

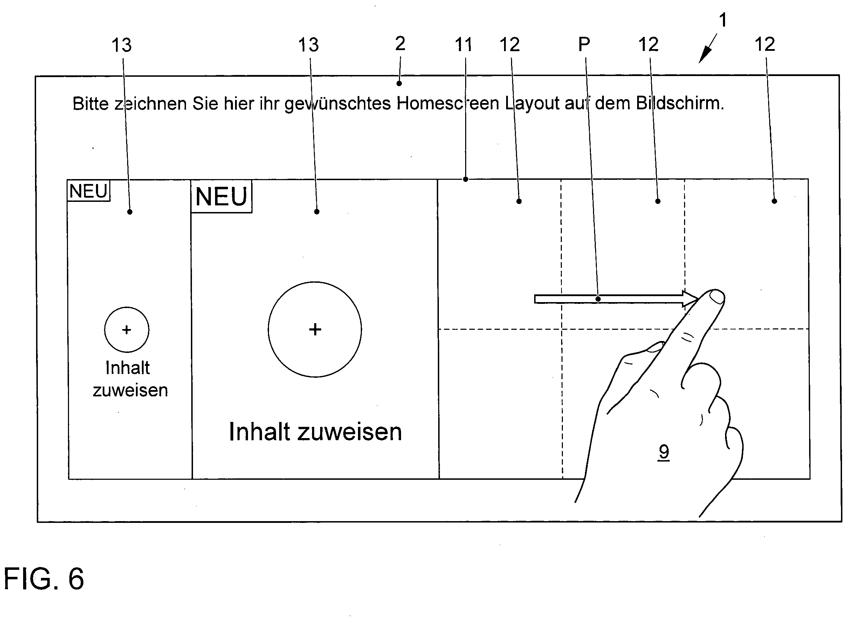

Figur 6 zeigt das Ergebnis der in Figur 5 veranschaulichten Anwenderinteraktion zur Definition einer zweiten Kachel 13, welche aus vier Zellen 12 verschmolzen wurde. Zudem zeigt Figur 6 eine Wischgeste einer Hand 9 eines Anwenders entlang eines Pfeils P, welche die verbliebenen Zellen 12 in der oberen Zeile des Rasters 11 als Zielpositionen einer neuen Kachel definiert.

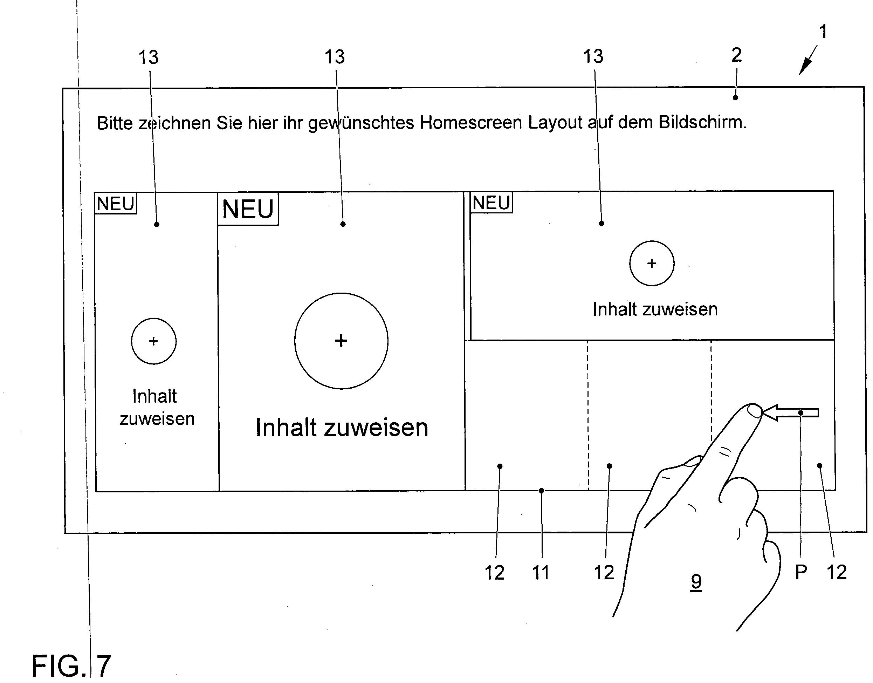

Figur 7 zeigt einerseits das Ergebnis der in Figur 6 dargestellten Anwendereingabe sowie eine zusätzliche Wischgeste der Hand 9 des Anwenders entlang eines Pfeils P, mittels welcher der Anwender die äußerst rechte Zelle 12 in der unteren Zeile des Rasters 11 als Position einer neuen Kachel definiert.

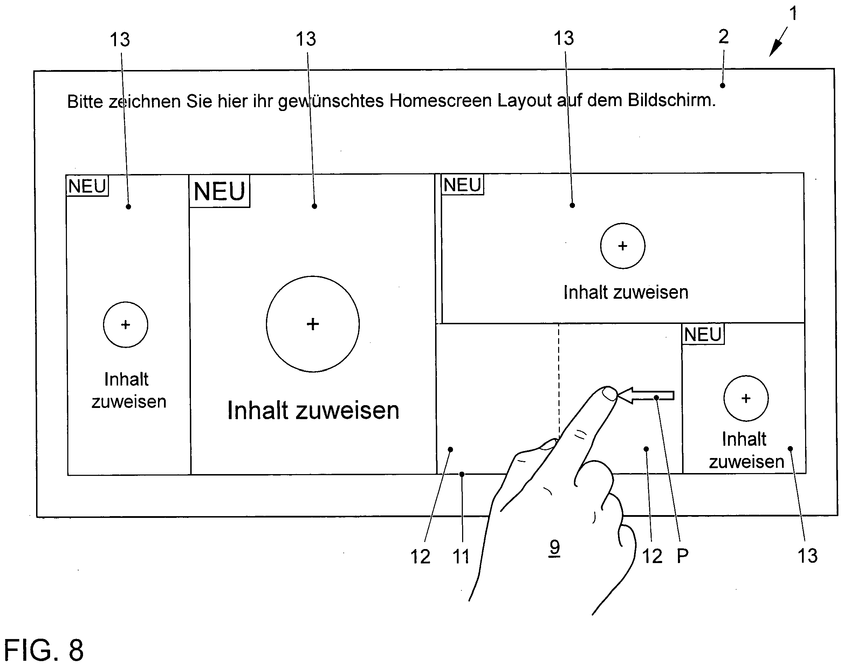

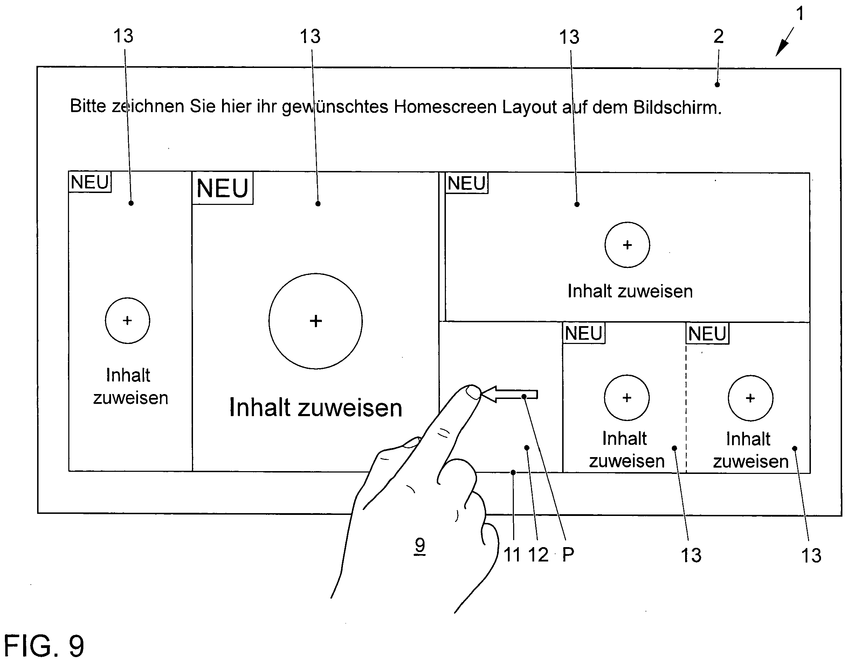

Die Figuren 8 und 9 zeigen entsprechende Gesten zur Definition zweier weiterer Kacheln 13.

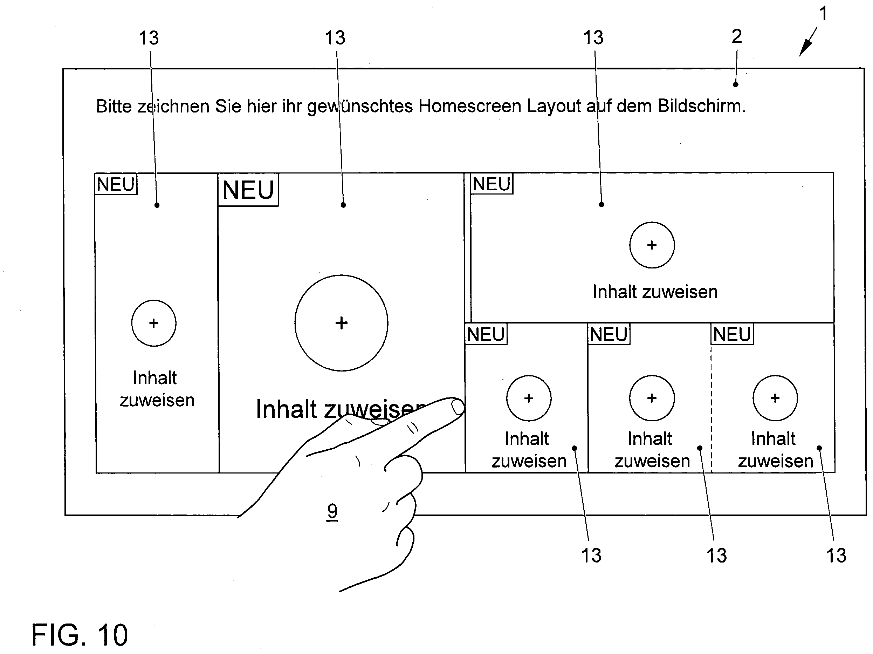

Figur 10 zeigt eine Tippgeste einer Hand 9 eines Anwenders auf eine Kachel 13, welche gänzlich als Schaltfläche zur Zuweisung eines Inhaltes zur Kachel 13 ausgestaltet ist.

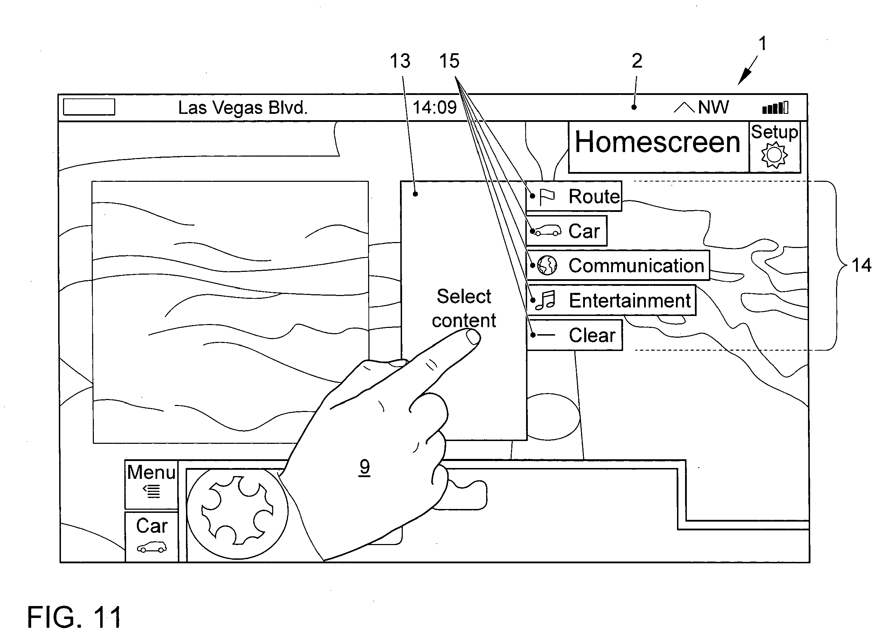

Figur 11 zeigt das Ergebnis der in Figur 10 dargestellten Anwenderinteraktion, im Ansprechen auf welche ein Auswahlmenü 14 umfassend fünf Einträge 15 angezeigt wird. Die Einträge 15 repräsentieren von oben nach unten die Darstellung einer Route, Informationen des Bordcomputers, Kommunikationsmöglichkeiten, eine Medienwiedergabe und eine Schaltfläche zum Entfernen der erstellten Kachel 13.

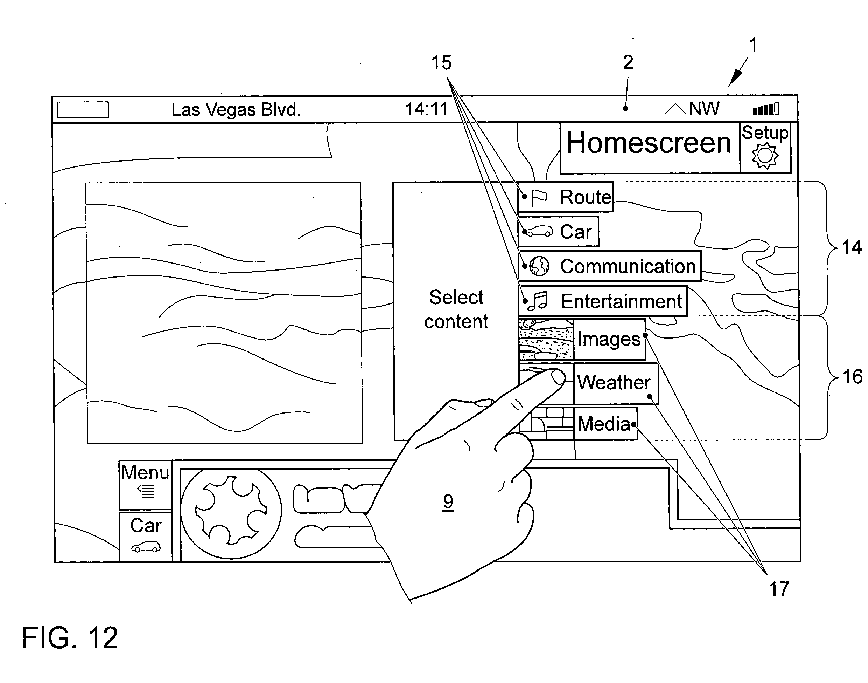

Figur 12 zeigt das Ergebnis einer Anwahl des Eintrages 15, im Ansprechen worauf ein Auswahluntermenü 16 mit Einträgen 17 angezeigt wird. Die Einträge 17 des Auswahluntermenüs repräsentieren eine Anzeige von Bildern, eine Darstellung von Wetterinformationen sowie eine Medienwiedergabe. Die Hand des Anwenders 9 führt eine Tippgeste auf den Eintrag 17 zur Anzeige der Wetterinformationen aus.

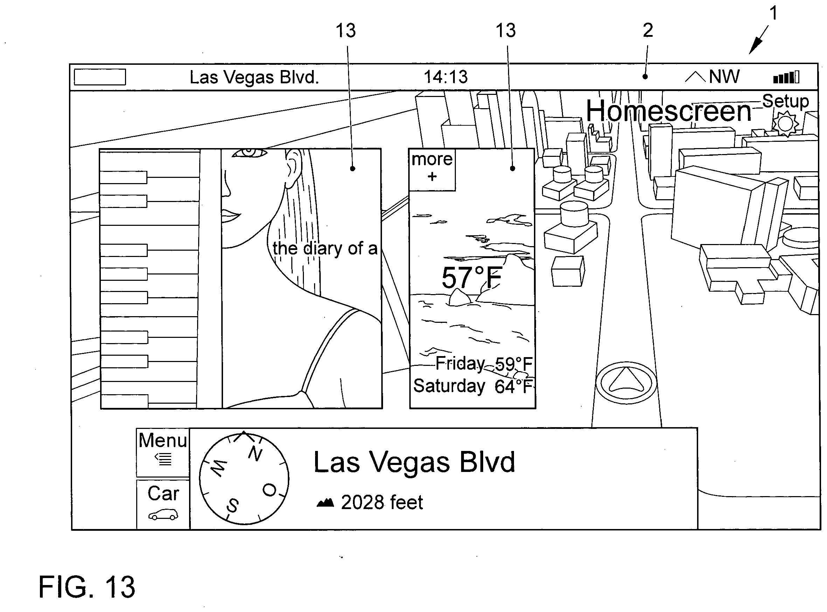

Figur 13 zeigt das Ergebnis der in Figur 12 veranschaulichten Auswahl. Die kürzlich definierte Kachel 13 in der Bildschirmmitte zeigt nun Wetterinformationen (Temperaturen) für den heutigen Tag und zwei folgende Tage.

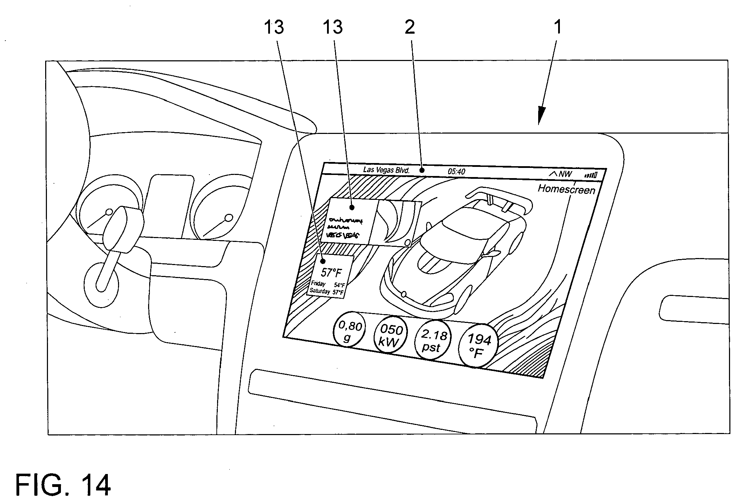

Figur 14 zeigt eine perspektivische Ansicht einer Anwenderschnittstelle 1 mit einem Bildschirm 2, welche in ein Armaturenbrett eines Fortbewegungsmittels eingelassen ist. Der Bildschirminhalt zeigt zwei bereits definierte Kacheln 13 in einem Anzeigemodus. Ein erfindungsgemäß vorgeschlagenes Kachelraster wird vorerst nicht angezeigt. Die beiden übereinander dargestellten Kacheln 13 weisen einen vordefinierten Abstand voneinander auf, so dass Bestandteile des Bildschirmhintergrundes ("Wallpaper") für eine optische Abgrenzung der durch die Kacheln repräsentierten Funktionsumfänge sorgen.

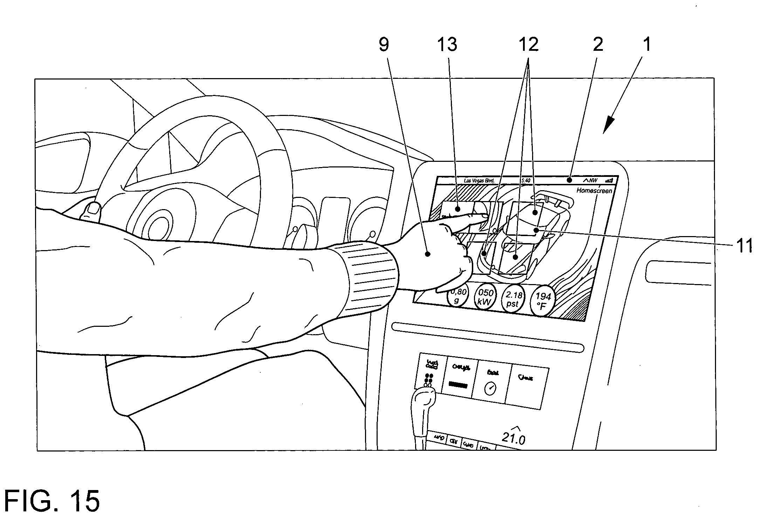

Figur 15 zeigt eine Annäherung und eine anschließende Longpress-Geste einer Hand 9 eines Anwenders auf die obere Kachel 13 auf dem Bildschirm 2. Die Annäherung bewirkt eine Anzeige eines Kachelrasters 11, welches im Unterschied zur Figur 2 Positionen zueinander beabstandeter Zellen 12 veranschaulicht. Mit anderen Worten sind die Zellen 12 des Kachelrasters 11 nicht durch Linien, sondern durch Streifen des Wallpapers voneinander abgegrenzt.

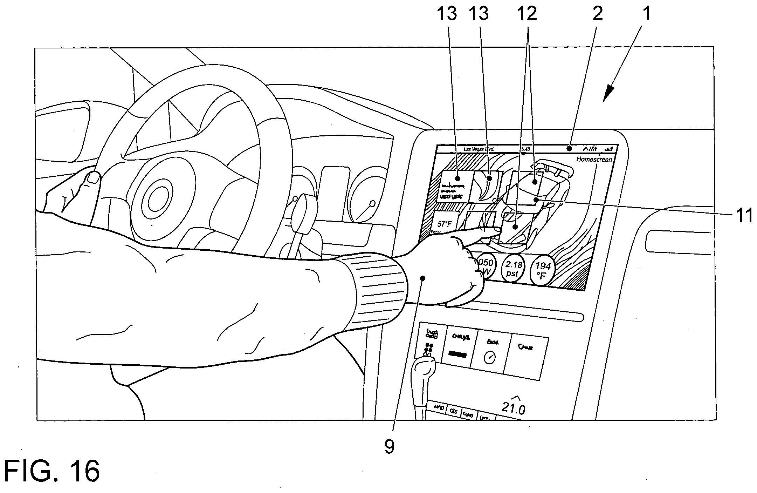

Figur 16 zeigt das Ergebnis einer Wischgeste bezüglich der oberen linken Kachel 13 auf eine Position, welche sämtlichen bislang unbelegten Zellen 12 des Kachelrasters im Wesentlichen am nächsten gelegen ist. Auf diese Weise wird eine Veränderung der Größe und der Position der Kachel 13 derart bewirkt, dass die zur dargestellten Zielposition geringst beabstandeten Zellen die Zielpositionen einer neudefinierten Kachel darstellen. Mit anderen Worten werden die bisherigen Positionen der verschobenen Kachel 13 aufgegeben und die beiden mittleren und übereinander geordneten sowie die beiden äußerst rechten und übereinander angeordneten Zellen 12 als gemeinsame Zielposition der neudefinierten Kachel ausgewählt, sobald der Anwender den Kontakt zur Oberfläche des Bildschirms 2 an der dargestellten Position unterbricht.

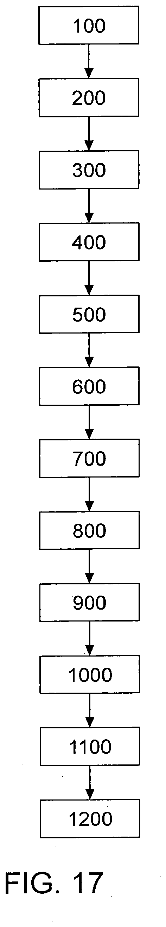

Figur 17 zeigt Schritte eines Ausführungsbeispiels eines erfindungsgemäßen Verfahrens zur Definition einer Kachel auf einer Anzeigeeinrichtung einer Anwenderschnittstelle eines Fortbewegungsmittels. In Schritt 100 wird eine Annäherung eines Anwenders an die Anzeigeeinrichtung erfasst. In Schritt 200 wird anschließend ein Kachelraster umfassend mehrere Zellen auf der Anzeigeeinrichtung angezeigt. In Schritt 300 wird eine Anwendergeste unter Kontakt mit einer berührungssensitiven Oberfläche bezüglich mindestens einer Zelle erfasst.

Im Ansprechen auf ein Beenden des Kontaktes mit der berührungssensitiven Oberfläche wird in Schritt 400 eine Kachel auf den Positionen derjenigen Zellen definiert, welche mittels der Anwendergeste wesentlich überstrichen worden sind. Hierbei werden geringfügige Überstreichungen unterhalb eines vordefinierten Mindestmaßes ignoriert. In Schritt 500 wird eine Tippgeste bezüglich der wie vorstehend beschrieben definierten Kachel erfasst und im Ansprechen darauf in Schritt 600 ein Auswahlmenü zur Definition eines in der Kachel anzuzeigenden Inhaltes eingeblendet. In Schritt 700 wird eine Auswahlgeste bezüglich eines Eintrages des Auswahlmenüs der definierten Kachel erfasst und im Ansprechen darauf in Schritt 800 ein Auswahluntermenü aufweisend dem Eintrag des Auswahlmenüs thematisch zugeordnete Einträge eingeblendet. Im Ansprechen auf eine Auswahlgeste bezüglich eines Eintrages des Auswahluntermenüs wird in Schritt 900 ein dem Eintrag des Auswahluntermenüs zugeordneter Inhalt der Kachel zugewiesen. In Schritt 1000 wird eine Geste mit einer Mindestkontaktdauer ("Longpress"-Geste) bezüglich der definierten Kachel erfasst. Auf diese Weise wird die bereits definierte Kachel von ihrer aktuellen Position abgelöst, eine jeweils aktuellen Position des Fingers des Anwenders zugeordnet und für eine Anpassung hinsichtlich ihrer Position und Größe vorbereitet. In Schritt 1100 wird eine Wischgeste bezüglich der abgelösten Kachel erfasst und anschließend in Schritt 1200 eine basierend auf der definierten Kachel neue Kachel in Abhängigkeit derjenigen Position von Zellen definiert, welche in einem vorbestimmten Verhältnis zu der Zielposition der Wischgeste stehen. Hierbei wird ein Rechteck durch diejenigen Zellen des erfindungsgemäßen Kachelrasters definiert, dessen Kanten eine einhüllende der von der abgelösten und bewegten Kachel überlagerten Zellen bilden. Im Ergebnis kann eine intuitive und einfache Definition und NeuPositionierung sowie Größenänderung von Kacheln auf einem Homescreen eines Bildschirms einer Anwenderschnittstelle für ein Fortbewegungsmittel erfolgen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Anwenderschnittstelle
- 2: Bildschirm
- 2a: Bildschirm
- 3: Infrarot-LED-Leiste
- 4: Elektronisches Steuergerät
- 5: Datenspeicher
- 6: Lautsprecher
- 7a, 7b: Ambientelichtleisten
- 8a: Fahrersitz
- 8b: Beifahrersitz
- 9: Hand des Anwenders
- 10: Pkw
- 11: Kachelraster
- 12: Zelle des Kachelrasters
- 13: Kachel
- 14: Auswahlmenü
- 15: Einträge des Auswahlmenüs
- 16: Auswahluntermenü
- 17: Einträge des Auswahluntermenüs
- 100 bis 1200: Verfahrensschritte
- P: Pfeil

## Patentansprüche

1. Verfahren zur Definition einer Kachel (13) auf einer Anzeigeeinrichtung (2) einer Anwenderschnittstelle (1) umfassend die Schritte:
- Anzeigen (200) eines Kachelrasters (11) umfassend mehrere Zellen (12) auf der Anzeigeeinrichtung (2) in einem Bedienmodus,
- Erfassen (300) einer Anwendergeste in Form einer ersten Wischgeste, unter Kontakt mit einer berührungssensitiven Oberfläche bezüglich mehrerer Zellen (12), und im Ansprechen darauf,
- Definieren (400) einer Kachel (13) auf den Positionen derjenigen Zellen (12), welche durch die Anwendergeste in vordefinierter Weise angewählt worden sind, durch ein Definieren eines Funktionsumfangs in der Kachel (13) durch den Anwender.

2. Verfahren nach Anspruch 1, wobei die Kachel (13) zusätzlich an Positionen solcher Zellen (12) definiert wird, welche innerhalb einer maximalen Breitenerstreckung und einer maximalen Höhenerstreckung der angewählten Zellen (12) angeordnet sind.

3. Verfahren nach Anspruch 1 oder 2 weiter umfassend
- Automatisches Einblenden eines Auswahlmenüs zur Definition eines in der Kachel (13) anzuzeigenden Inhaltes im Ansprechen auf das Definieren der Kachel (13).

4. Verfahren nach einem der vorstehenden Ansprüche weiter umfassend
- Erfassen (500) einer Tippgeste bezüglich einer definierten Kachel (13) und im Ansprechen darauf
- Einblenden (600) eines Auswahlmenüs zur Definition eines in der Kachel (13) anzuzeigenden Inhaltes.

5. Verfahren nach einem der vorstehenden Ansprüche 3 oder 4 weiter umfassend
- Erfassen (700) einer Auswahlgeste bezüglich eines Eintrages (15) des Auswahlmenüs (14) einer definierten Kachel (13) und im Ansprechen darauf
- Zuweisen eines dem Eintrag (15) des Auswahlmenüs (14) zugeordneten Inhaltes zu der Kachel (13).

6. Verfahren nach Anspruch 5, wobei die Auswahlgeste zusätzlich
- eine Tippgeste auf den Eintrag oder
- eine zweite Wischgeste bezüglich des Eintrages (15) mit dem Ziel der definierten Kachel (13)
umfasst.

7. Verfahren nach einem der vorstehenden Ansprüche 3 bis 6 weiter umfassend
- Einblenden (800) eines Auswahluntermenüs (16) aufweisend dem Eintrag (15) des Auswahlmenüs (14) thematisch zugeordnete Einträge (17) und im Ansprechen auf einer Auswahlgeste bezüglich eines Eintrags (17) des Auswahluntermenüs (16)
- Zuweisen (900) eines dem Eintrag (17) des Auswahluntermenüs (16) zugeordneten Inhaltes zu der Kachel (13).

8. Verfahren nach einem der vorstehenden Ansprüche weiter umfassend
- Erfassen (1000) einer Geste mit einer Mindestkontaktdauer, nachfolgend "Longpress-Geste" genannt, auf der definierten Kachel (13),
- Erfassen (1100) einer dritten Wischgeste bezüglich der Kachel (13), und
- Definieren (1200) einer neuen Kachel (13) in Abhängigkeit derjenigen Positionen von Zellen (12), welche in einem vorbestimmten Verhältnis zu einer Zielposition der Wischgeste stehen.

9. Verfahren nach Anspruch 8, wobei das vorbestimmte Verhältnis in einem Abstand der Zielposition zu den Zellen (12) besteht, welcher geringer als die Hälfte, insbesondere ein Drittel, bevorzugt ein Viertel, einer Kantenlänge bzw. Breite einer Zelle (12) ist.

10. Verfahren nach Anspruch 8 oder 9, wobei das vorbestimmte Verhältnis darin besteht, dass
- die neue Kachel (13) denjenigen Positionen von Zellen (12) zugeordnet wird, welche einer an die Zielposition der zweiten Wischgeste verschobenen definierten Kachel (13)
- bestmöglich entsprechen und/oder
- zumindest anteilig von der verschobenen definierten Kachel (13) überlagert würden.

11. Verfahren nach einem der vorstehenden Ansprüche, weiter umfassend
- Anzeigen des Kachelrasters (11) im Ansprechen auf
- ein Erfassen (100) einer dritten Wischgeste mit Startposition auf einer bereits definierten Kachel (13) und/oder
- Annäherung eines Anwenders an die Anzeigeeinrichtung (2).

12. Anwenderschnittstelle umfassend
- eine Anzeigeeinrichtung (2)
- eine Erfassungseinheit (3), und
- eine Auswerteeinheit (4), wobei
- die Anwenderschnittstelle (1) eingerichtet ist, ein Verfahren gemäß einem der vorstehenden Ansprüche durchzuführen.

13. Computerprogrammprodukt umfassend Instruktionen, welche, wenn Sie auf einer Auswerteeinheit (4) einer Anwenderschnittstelle (1) nach Anspruch 12 ausgeführt werden, die Auswerteeinheit (4) veranlassen, die Schritte eines Verfahrens nach einem der Ansprüche 1 bis 11 durchzuführen.

14. Signalfolge repräsentierend Instruktionen, welche, wenn Sie auf einer Auswerteeinheit (4) einer Anwenderschnittstelle (1) nach Anspruch 12 ausgeführt werden, die Auswerteeinheit (4) veranlassen, die Schritte eines Verfahrens nach einem der Ansprüche 1 bis 11 durchzuführen.

15. Fortbewegungsmittel umfassend eine Anwenderschnittstelle nach Anspruch 12.

## Claims

1. A method for defining a tile (13) on a display device (2) of a user interface (1) comprising the steps:
- Display (200) of a tile grid (11) comprising a plurality of cells (12) on the display device (2) in an operating mode,
- detection (300) of a user gesture in the form of a first swiping gesture, under contact with a touch-sensitive surface with respect to a plurality of cells (12), and in response thereto,
- defining (400) a tile (13) on the positions of those cells (12), which have been selected by the user gesture in a predefined way, by a definition of a functional range in the tile (13) by the user.

2. The method according to claim 1, wherein the tile (13) is additionally defined at positions of such cells (12), which are arranged within a maximum width extension and a maximum vertical extension of the selected cells (12).

3. The method according to claim 1 or 2 further comprising
- automatic display of a selection menu for defining a content to be displayed in the tile (13) in response to defining the tile (13).

4. The method according to any one of the preceding claims further comprising
- detection (500) of a tap gesture with respect to a defined tile (13) and in response thereto
- display (600) of a selection menu for defining a content to be displayed in the tile (13).

5. The method according to any one of the preceding claims 3 or 4 further comprising
- detection (700) of a selection gesture with respect to an entry (15) of the selection menu (14) of a defined tile (13) and in response thereto
- assignment of a content associated with the entry (15) of the selection menu (14) to the tile (13).

6. The method according to claim 5, wherein the selection gesture additionally comprises
- a tap gesture on the entry or
- a second swiping gesture with respect to the entry (15) with the target of the defined tile (13).

7. The method according to any one of the preceding claims 3 to 6 further comprising
- display (800) of a selection sub-menu (16) having entries (17) thematically associated with the entry (15) of the selection menu (14) and in response to a selection gesture with respect to an entry (17) of the selection sub-menu (16)
- assignment (900) of a content associated with the entry (17) of the selection sub-menu (16) to the tile (13).

8. The method according to any one of the preceding claims further comprising
- detection (1000) of a gesture with a minimum contact time, hereinafter called "longpress gesture," on the defined tile (13),
- detection (1100) of a third swiping gesture with respect to the tile (13), and
- defining (1200) a new tile (13) depending on those positions of cells (12), which are in a predetermined relationship to a target position of the swiping gesture.

9. The method according to claim 8, wherein the predetermined relationship is a distance of the target position from the cells (12), which is less than half, in particular a third, preferably a fourth of an edge length or width of a cell (12).

10. The method according to claim 8 or 9, wherein the predetermined relationship consists in that
- the new tile (13) is associated with those positions of cells (12), which correspond to a defined tile (13) shifted to the target position of the second swiping gesture
- at best and/or
- would be at least partly overlaid by the shifted defined tile (13).

11. The method according to any one of the preceding claims, further comprising
- display of the tile grid (11) in response to
- a detection (100) of a third swiping gesture with starting position on an already defined tile (13) and/or
- approach of a user to the display device (2).

12. User interface comprising
- a display device (2)
- a detection unit (3), and
- an evaluation unit (4), wherein
- the user interface (1) is configured to carry out a method according to any one of the preceding claims.

13. Computer program product comprising instructions, which, if they are carried out on an evaluation unit (4) of a user interface (1) according to Claim 12, cause the evaluation unit (4) to carry out the steps of a method according to any one of Claims 1 to 11.

14. Sequence of signals representing instructions, which, if they are carried out on an evaluation unit (4) of a user interface (1) according to claim 12, cause the evaluation unit (4) to carry out the steps of a method according to any one of Claims 1 to 11.

15. Means of locomotion comprising a user interface according to claim 12.

## Revendications

1. Procédé de définition d'une vignette (13) sur un dispositif d'affichage (2) d'une interface utilisateur (1), comprenant les étapes suivantes :
- affichage (200) d'un ensemble de vignettes (11) comprenant plusieurs cellules (12) sur le dispositif d'affichage (2) en mode commande,
- détection (300) d'un geste d'utilisateur sous la forme d'un premier geste d'effleurement, en contact avec une surface tactile, concernant plusieurs cellules (12) et, en réponse à cela,
- définition (400) d'une vignette (13) aux positions des cellules (12) qui ont été sélectionnées par le geste de l'utilisateur de manière prédéfinie, grâce à une définition d'une gamme de fonctions dans la vignette (13) par l'utilisateur.

2. Procédé selon la revendication 1, la vignette (13) étant définie en outre aux positions des cellules (12) qui sont disposées à l'intérieur d'une extension en largeur maximale et d'une extension en hauteur maximale des cellules (12) sélectionnées.

3. Procédé selon la revendication 1 ou 2, comprenant en outre :
- l'apparition automatique d'un menu de sélection pour la définition d'un contenu à afficher dans la vignette (13), en réponse à la définition de la vignette (13).

4. Procédé selon l'une des revendications précédentes, comprenant en outre :
- la détection (500) d'un geste de tapotage concernant une vignette (13) définie et, en réponse à cela,
- l'apparition (600) d'un menu de sélection pour la définition d'un contenu à afficher dans la vignette (13).

5. Procédé selon l'une des revendications précédentes 3 ou 4, comprenant en outre :
- la détection (700) d'un geste de sélection concernant une entrée (15) du menu de sélection (14) d'une vignette (13) définie et, en réponse à cela,
- l'attribution d'un contenu correspondant à l'entrée (15) du menu de sélection (14) à la vignette (13).

6. Procédé selon la revendication 5, le geste de sélection comprenant en outre :
- un geste de tapotage sur l'entrée ou
- un deuxième geste d'effleurement concernant l'entrée (15) avec la cible de la vignette (13) définie.

7. Procédé selon l'une des revendications précédentes 3 à 6, comprenant en outre :
- l'apparition (800) d'un sous-menu de sélection (16) comprenant des entrées (17) dont le thème correspond à l'entrée (15) du menu de sélection (14) et, en réponse à un geste de sélection concernant une entrée (17) du sous-menu de sélection (16),
- l'attribution (900) d'un contenu correspondant à l'entrée (17) du sous-menu de sélection (16) à la vignette (13).

8. Procédé selon l'une des revendications précédentes, comprenant en outre :
- la détection (1000) d'un geste avec une durée de contact minimale, appelé dans la suite « geste de pression prolongé », sur la vignette (13) définie,
- la détection (110) d'un troisième geste d'effleurement concernant la vignette (13) et,
- la définition (1200) d'une nouvelle vignette (13) en fonction des positions de cellules (12) qui se trouvent dans une relation prédéterminée par rapport à une position cible du geste d'effleurement.

9. Procédé selon la revendication 8, la relation prédéterminée consistant en une distance de la position cible par rapport aux cellules (12) qui est plus faible que la moitié, plus particulièrement, un tiers, de préférence un quart, d'une longueur d'arête ou d'une largeur d'une cellule (12).

10. Procédé selon la revendication 8 ou 9, la relation prédéterminée consistant en ce que :
- la nouvelle vignette (13) correspond aux positions des cellules (12) qui
- correspondent le mieux à une vignette (13) définie déplacée vers la position cible du deuxième geste d'effleurement et/ou
- seraient superposées au moins proportionnellement à la vignette (13) définie déplacée.

11. Procédé selon l'une des revendications précédentes, comprenant en outre :
- l'affichage de l'ensemble de vignettes (11) en réponse à
- une détection (100) d'un troisième geste d'effleurement avec une position de départ sur une vignette (13) déjà définie et/ou
- l'approche d'un utilisateur du dispositif d'affichage (2).

12. Interface utilisateur comprenant
- un dispositif d'affichage (2)
- une unité de détection (3) et
- une unité d'analyse (4),
- l'interface utilisateur (1) étant conçue pour exécuter un procédé selon l'une des revendications précédentes.

13. Produit de programme informatique comprenant des instructions qui, lorsqu'elles sont exécutées sur une unité d'analyse (4) d'une interface utilisateur (1) selon la revendication 12, font en sorte que l'unité d'analyse (4) exécute les étapes d'un procédé selon l'une des revendications 1 à 11.

14. Séquence de signaux représentant des instructions qui, lorsqu'elles sont exécutées sur une unité d'analyse (4) d'une interface utilisateur (1) selon la revendication 12, font en sorte que l'unité d'analyse (4) exécute les étapes d'un procédé selon l'une des revendications 1 à 11.

15. Moyen de transport comprenant une interface utilisateur selon la revendication 12.
